# EUROPEAN PATENT APPLICATION

(11) **EP 4 239 515 A1**
(43) Date of publication of application: **06.09.2023**
(21) Application number: 22211436.5
(22) Date of filing: 05.12.2022
(51) Int. Cl.: G06F 40/129, G06F 40/284, G06F 40/30, G06F 40/53

(54) **A METHOD AND SYSTEM FOR ANALYZING A PIECE OF TEXT COMPRISING CHINESE CHARACTERS**

(30) Priority: 01.03.2022 HK 32022049090
(71) Applicant: Chrysus Intellectual Properties Limited, Hong Kong 123456 (HK)
(72) Inventor: Leung, Wai Fung, 123456 Hong Kong (HK)
(74) Representative: Bewley, Ewan Stuart

(57) **Abstract**

The invention provides a computer-implemented method for analyzing a piece of text comprising Chinese characters. The method comprises the steps of truncating the piece of text into a plurality of first block units each having a first predefined number of N characters, where N is an integer and is greater than or equal to one; determining, for a selected character from the N characters of each of the first block units, one or more radicals forming said selected character; identifying, from the one or more radicals forming said selected character, one or more semantic radicals by comparing the one or more radicals with a database comprising semantic radicals and their associated meanings, and determining one or more meanings of the one or more semantic radicals in relation to said selected character; categorizing the plurality of first block units into one or more category groups based on the determined one or more meanings of the one or more semantic radicals of the selected character of each of the first block units; and computing a number of the first block units categorized in the respective one or more category groups indicative of one or more characteristics of the text.

## Description

### Field of the Invention

The invention relates to a computer-implemented method and system for analyzing a piece of text, and particularly, but not exclusively, for analyzing a piece of text comprising Chinese characters.

### Background of the Invention

The advancement of information and computer technology has created significant impact on various aspects of our life including education. It has become a global trend to use e-Learning resources as a medium for learning and teaching both inside and outside the classroom. With the increasing popularity of e-Learning, a large variety of digital resources including e-text and e-textbooks have been developed.

Nevertheless, like the traditional learning materials, one difficulty faced by educators and parents is that it is generally difficult to evaluate whether the e-resources are of the appropriate topic or level to meet the specific teaching or studying requirements. It is also difficult to determine whether the content of e-resources fulfill a particular learning purpose as desired such as whether the e-resources are of the right theme, purpose and/or genre. Most of the time, assessment is made according to the experience of the educators and the parents, which could be easily influenced by subjective views and therefore could be inaccurate.

### Objects of the Invention

An object of the present invention is to provide a computer-implemented method and system for analyzing a piece of e-text of or comprising Chinese characters.

Another object of the present invention is to mitigate or obviate to some degree one or more problems associated with known e-text analytic products, or at least to provide a useful alternative.

The above objects are met by the combination of features of the main claims; the sub-claims disclose further advantageous embodiments of the invention.

One skilled in the art will derive from the following description other objects of the invention. Therefore, the foregoing statements of object are not exhaustive and serve merely to illustrate some of the many objects of the present invention.

### Summary of the Invention

In a first main aspect, the invention provides a computer-implemented method for analyzing a piece of text comprising Chinese characters. The method comprises steps of truncating the piece of text into a plurality of first block units each having a first predefined number of N characters, where N is an integer and is greater than or equal to one; determining, for a selected character from the N characters of each of the first block units, one or more radicals forming said selected character; identifying, from the one or more radicals forming said selected character, one or more semantic radicals by comparing the one or more radicals with a database comprising semantic radicals and their associated meanings, and determining one or more meanings of the one or more semantic radicals in relation to said selected character; categorizing the plurality of first block units into one or more category groups based on the determined one or more meanings of the one or more semantic radicals of the selected character of each of the first block units; and computing a number of the first block units categorized in the respective one or more category groups indicative of one or more characteristics of the text.

In a second main aspect, the invention provides a system comprising a memory for storing data and a processor for executing computer readable instructions, wherein the processor is configured by the computer readable instructions when being executed to implement the method of the first main aspect.

The summary of the invention does not necessarily disclose all the features essential for defining the invention; the invention may reside in a sub-combination of the disclosed features.

### Brief Description of the Drawings

The foregoing and further features of the present invention will be apparent from the following description of preferred embodiments which are provided by way of example only in connection with the accompanying figure, of which:
Fig. 1 is a block schematic diagram showing a computer-implemented system and method for analyzing a piece of text comprising Chinese characters according to the present invention;
Fig. 2 shows two sets of seven (7) category groups each having the highest number of block units with the data generated based on two pieces of exemplified texts comprising Chinese characters analyzed by the method and system of Fig.1, the block units being categorized based on meaning of the forming semantic radicals of the characters comprising the block units;
Fig. 3 shows a set of seven (7) category groups each having the highest number of block units with the data generated based on a piece of exemplified text comprising Chinese characters analyzed by the method and system of Fig. 1, the block units being categorized based on part-of-speeches of the forming semantic radicals of the characters comprising the block units; and
Fig. 4 shows a number of ratios of the part-of-speeches as shown in Fig. 3.

### Description of Preferred Embodiments

The following description is of preferred embodiments by way of example only and without limitation to the combination of features necessary for carrying the invention into effect.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

It should be understood that the elements shown in the figure, may be implemented in various forms of hardware, software or combinations thereof. Preferably, these elements are implemented in a combination of hardware and software on one or more appropriately programmed general-purpose devices, which may include a processor, memory and input/output interfaces.

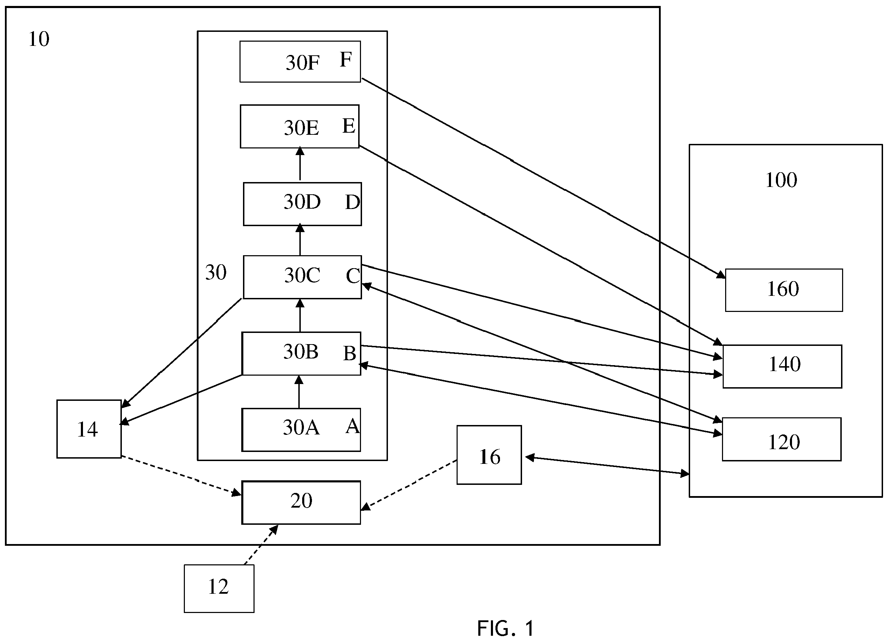

Referring to Fig. 1, shown is a block schematic diagram of a system and method for analyzing a piece of text comprising Chinese characters. The piece of text can be any forms of writings such as articles, essays, stories, poems or literatures of any kind in Chinese language or comprising Chinese characters. In the context of this description, the text may comprise written or pictorial characters such as Chinese characters in one or more languages such as, but are not limited to, traditional and simplified Chinese as "hanzi", East Asian languages such as "kanji" in the Japanese writing system, "hanja" in the Korean writing system, and "Hán tu" in the Vietnamese writing system. The term "character" is to be given a broad meaning to encompass the meaning of "letter", "word", "numeral", "logograms", "ideogram", or the like.

Chinese characters are considered to be one of the oldest writing systems in the world and have been continuously use throughout east and southeast Asia. Chinese characters can be logograms representing a word or a morpheme, and can be generally formed of graphical components known as radicals. In the vast majority of Chinese characters, radicals are phono-semantic in nature. For example, a Chinese character formed of two or more radicals may have one or more radicals being semantic indicators, and one or more radicals being phonetic components indicative to the pronunciation of the character. Radicals may appear in any position in a character. For example, the radical " 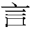 " appears on the left side in the characters such as " 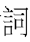 " , " 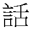 " , " 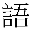 " and " 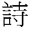 " , but might appear on the right side such as in the character " 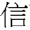 " or at the bottom such as in the character " 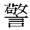 ". There could also be two radicals that share the same graphical component, such as " 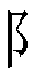 ", but they are considered as different radicals depending on its location in the character. For example, when it is used to give a meaning of "city" such as in the character " 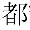 ", it is positioned on the right; but when it is used to give a meaning of "land" such as in the character " 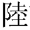 ", it is positioned on the left.

Turning to the present invention, the method can be implemented in a computer device 10 in any known form including desk top computer, laptop computer, tablet computer, smart phones, or any portable electronic smart devices. The method may also be implemented by a network server. Preferably, the computer device 10 is connectable with a network 100, either private or public such as the internet, via a communication module 16 for exchanging information or data.

Specifically, the computer device 10 comprises an input interface 20 for inputting the text to be analyzed. Different inputting routes are shown by the dotted-lines in Fig. 1. For example, a user may typewrite the text via the computer input means 12, which may comprise, for example, a keyboard or a touch screen panel. The user may also open a pre-typed, scanned or saved text (e.g. in .txt, .doc, .pdf or .jpg format, etc.) which has been previously prepared and saved in the memory 14 of the computer device 10. The user may also download an E-article (e.g. in any of .txt, .doc, or .pdf format or any other format for electronic devices) of interest from the internet 100 via the communication module 16. In one embodiment, a user may also input the text by voice via any known voice recognition devices (not shown).

The inputted piece of text will subsequently be processed and analyzed by a processor 30. The processor 30 may comprise a plurality of functional blocks for performing various functions thereof. For example, the processor 30 may comprise a number of modules including the truncating module 30A, the determining module 30B, the identifying module 30C, the categorizing module 30D and the computing module 30E, with their respective functions described as follows:
First, the processor 30 will process the text comprising Chinese characters by the truncating module 30A to truncate the piece of text into a plurality of first block units each having a first predefined number of N characters, where N is an integer and is greater than or equal to one. The truncating step is indicated as A in Fig. 1. For example, during the first round of truncation, characters of the text are truncated into a plurality of block units each having one (1) character. The character will be selected for the purpose of determining one or more radicals forming said character by the determining module 30B. The determining step is indicated as B in Fig. 1. In one embodiment, the determining of one or more radicals from the selected character can be conducted by, for example, scanning through the character for every component forming said character, and subsequently, comparing each component with a database 120, such as a dictionary database 120 comprising a list of radicals commonly recognized in the Chinese language system. In the scenario that, in a later round of truncation that the characters of the text have been truncated into block units of two or more characters, each of the characters will be sequentially selected and scanned for its forming radicals. After the forming radicals of each character comprising the block units are determined, the identifying module 30C may then process to identify, from the radicals forming said character, one or more semantic radicals, that is, the radical which provides a broad meaning of the character, by comparing the forming radicals with the database 120, such as the dictionary database 120, which comprises information on semantic radicals, their variations, and their associated meanings, etc. One or more associated meanings of the one or more semantic radicals will then be determined in relation to the selected character. The identifying step is indicated as C in Fig. 1.

For example, a truncated block unit comprising a single character " 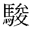 " will be determined, by the determining module 30B, as comprising two forming radicals, " 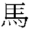 " and " 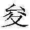 ", with the radical " 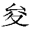 " being further identified, by the identifying module 30C, as being the phonetic radical, and the radical " 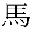 " as being the semantic radical having a meaning of "a horse". In one embodiment, the meaning of the one or more semantic radicals may comprise both an explicit, direct meaning and an implicit, associated meaning of the semantic radicals to cover both the denotation and the connotation of the semantic radicals. For example, for a block unit comprising the character " 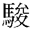 ", the explicit meaning of the semantic radical " 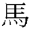 " will be identified as "a horse", and additionally, the radical " 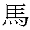 " may also comprise a number of implicit, associated meanings such as or in relation to the meaning of "quickly" and "successful" etc.

In another example, a block unit comprises two characters " 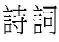 " is first processed, via the determining module 30B, by selecting the first character " 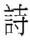 " to determine the forming radicals as " 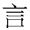 " and " 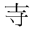 " The identifying module 30C then identifies that both of the radicals " 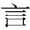 " and " 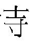 " are or can be semantic in nature, and that the radical " 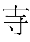 " is further indicative as to the pronunciation of the character. Both of the explicit meaning and implicit meaning of the two radicals will be determined. For example, the radical " 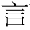 " has a direct meaning of "speech" and is implicative to "language"; and the radical " 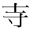 " has a direct meaning of "temple" and an implicit meaning to associate with "rules and regulations of historical family stored in the ancient temple". Sequentially, the second character " 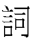 " will then be analyzed to comprise two forming radicals namely, " 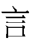 " and " 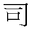 ", with both radicals " 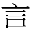 " and " 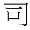 " as being semantic in nature and the radical " 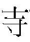 " as being a phonetic radical. Again, the radical " 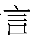 " has a direct meaning of "speech" and is implicative to "language"; and the radical " 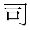 " has an associated meaning of "control, structured". The two characters therefore processed in combination to provide an indicative meaning for the block unit as referring to "a linguistic piece which is structured with rules" such as poetry.

The results after the determining step to determine the forming-radicals in the selected characters of the block units and the identifying step to identify the semantic radicals from the forming-radicals are preferably stored in a character database 140 for speeding up the processing time and for the continuous learning by the system to improve accuracy of the determining and the identifying steps processed by the respective modules 30B and 30C. Alternatively, the results may also be stored at the memory 14 of the device 10. The records may help determining use frequencies of the block units which may further help determining grades or levels of difficulties of the text being analyzed.

Based on the determined one or more meanings of the one or more semantic radicals of the selected characters of each of the block units and thus the indicative meanings of the block units, the block units are then categorized, via the categorizing module 30D, into one or more category groups. The categorizing step is indicated as D in Fig. 1. The category groups may comprise or related to one or more indicative, general meanings and/or associated meanings of the block units when the meaning of each character comprising the block units are considered based on the determined meaning of the forming radical of said character. The category groups will be discussed further below with reference to examples.

After truncating the text into a plurality of first block units each having a first predefined number of N characters, where N is an integer and is greater than or equal to one, the text can then be successively truncated into one or more second block units each having a second predefined number of M characters, wherein M is an integer greater than N by at least a value of 1. The process will then be repeated and followed by the subsequent determining, identifying and categorizing steps (B, C, D) as described above. At the end of the process and after the whole piece of text has successively been truncated and analyzed based on block units of various block sizes, the process may result in a large number of category groups each generalizing the indicative and/or associated meanings of the semantic radicals forming the respective block units.

Based on the large number of block units having various block sizes and the category groups generated, the computing module 30E will then compute the number of the block units categorized in the respective one or more category groups. The step may comprise generating of a list of data such as in the form of a statistic comprising the number of the block units in each respective category groups. As a large number of category groups can be generated, and depending on the size and complexity of the text being analyzed, a predetermined number of category groups, such as five (5) to ten (10) groups, having the highest number of the block units will be outputted and presented to the user. The computing step is indicated as E in Fig. 1. Preferably, the category groups having the highest numbers of the block units in respect of the piece of text being analyzed will be stored in the character database 140 or the memory 14 of the device 10 for the purpose of speeding up and/or improving accuracy of the analysis.

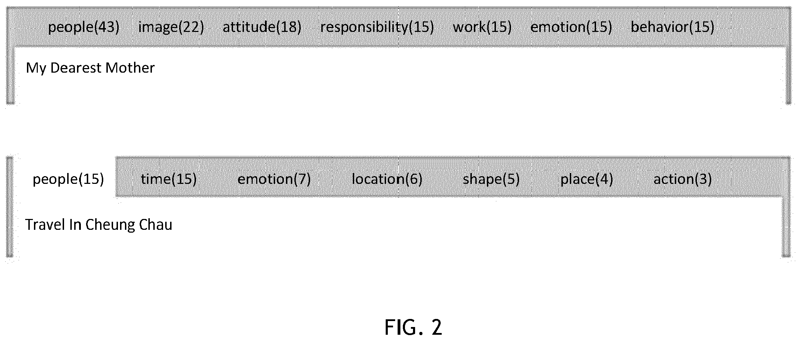

Fig. 2 shows an exemplified statistic presenting seven (7) category groups having the highest number of block units, with the number of block units in each group being indicated in paratheses next to the respective category groups. In the first example, the article being analyzed is of a title "My Dearest Mother/ 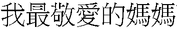 ". The block units comprising the text have been analyzed by the device 10 and the block units are categorized under a number of category groups related to or associated with meanings of semantic radicals forming said block units. The 7 category groups with the highest number block units being "people/ 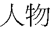 (43)", "image/ 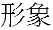 (22)", "attitude/ 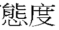 (18)", "responsibility/ 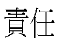 (15)", "work/ 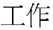 (15)", "emotion/ 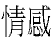 (15)" and "behavior/fx (15)". In the second example, the article being analyzed is of a title "Travel In Cheung Chau/ 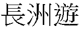 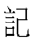 ", and the 7 category groups comprise the highest number block units being "people/ 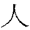 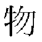 (15)", "time/ 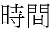 (15)", "emotion/ 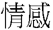 (7)", "location/ 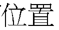 (6)", "shape/ 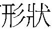 (5)", "place/ 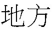 (4)" and "action/ 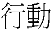 (3)".

The category groups with the highest number of block units are therefore indicative of one or more characteristics of the text. The characteristics may comprise or represent, but are not limited to, one or more of a theme, a genre, a grade and/or a level of difficulty of the text. For example, a text having the highest number of block units in the category groups of "people/ 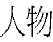 ", "time/ 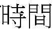 ", "action/ 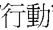 " and "place/ 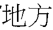 " is likely to be a narrative relating to travelling; an article having the highest number of block units in the category groups of "image/ 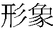 ", "color/ 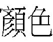 ", "expression/ 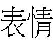 " and "shape/ 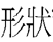 " is likely to be a piece of descriptive writing; and a text having the highest number of block units in the category groups of "finance/ 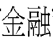 ", "business/ 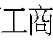 " and "benefit/ 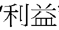 " is likely to relate to a text for business purposes, etc.

The analysis of the present invention is therefore useful in suggesting to the user one or more overall characteristics of the text being analyzed, and/or confirming whether the theme, genre, grade or level of difficult of the text is appropriate or in compliance with the user's request. For example, the device 10 may suggest that the inputted piece of text is too simple or difficult for the user at a certain age or grade, or that the text is analyzed to comprise a good number of words, terms or expressions which are related to a theme in compliance with or different to a certain topic of writing, etc. The device 10 may further suggest, based on the overall characteristics of the text being analyzed, related terms, words, vocabularies, or expressions with related meanings or applications such as synonyms, etc.

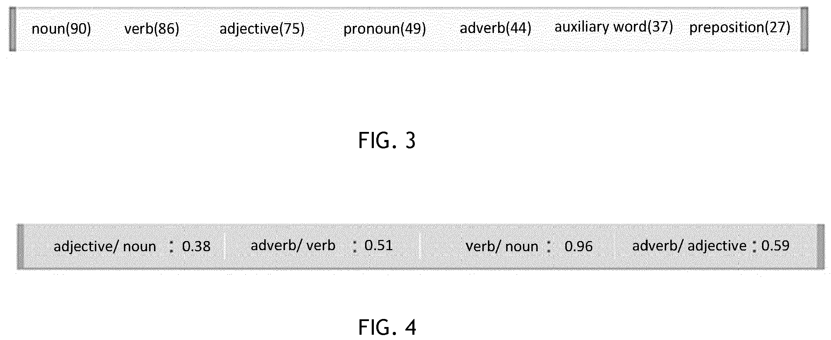

In one embodiment, the step of categorizing the block units into one or more category groups may further comprise categorizing the block units based on part-of-speeches of the one or more meanings of the one or more semantic radicals of the characters of each of the block units. For example, for a block unit comprising the character " 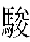 ", the semantic radical " 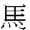 " can be identified with an explicit meaning of "a horse", and also a number implicit, associated meanings such as or in relation to "quickly" and "successful" etc. The meanings can therefore be further categorized based on part-of-speeches such as, for the meaning of "a horse" it is sub-categorized under the part-of-speech of a noun; for the meaning of "quickly" it is sub-categorized under the part-of-speech of an adverb; and for the meaning of "successful" it is sub-categorized under the part-of-speech of an adjective. Fig. 3 shows the statistic of an exemplified piece of text, with the 7 category groups comprise the highest number block units being "noun/ 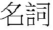 (90)", "verb/ 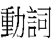 (86)", "adjective/ 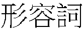 (75)", "pronoun/ 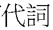 (49)", "adverb/ 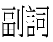 (44)", "auxiliary word/ 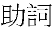 (37)" and "preposition/ 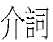 (27)". The categorization based on part-of-speeches further allows analysis of the characteristics of the text by computing, via the computing module 30E, one or more ratios of the part-of-speeches of the one or more semantic radicals of the character of each of the block units. Referring to Fig. 4, shown are the ratios of the category groups of part-of-speeches as shown in Fig. 3 and specifically, the ratio of adjective to noun ( 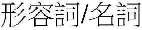 ) is 0.83, the ratio of adverb to verb ( 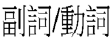 ) is 0.51, the ratio of verb to noun ( 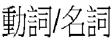 ) is 0.96, and the ratio of adverb to adjective ( 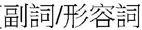 ) is 0.59. The highest ratios being verb to noun ( 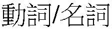 ) and adjective to noun ( 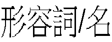 ) 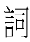 ) and therefore, it is indicative to the characteristic of the text being analyzed that the text comprises a balanced sentence structure having a verb to noun ratio close to one, and that the writer has used a good number of adjectives to describe the objects in the text. It is also indicative that the text can be further improved by using more adverbs to describe actions in the text. Accordingly, the article can be reasonably suggested of a grade, a level of difficulty, and/or one or more areas of improvement, etc. by the present invention based on the statistic generated.

In one embodiment, the step of categorizing the block units into one or more category groups may further comprise categorizing the block units into commonly used terms, uncommonly used terms, proverbs, idioms, slangs or jargons, terms based on technical fields and/or industries such as business terms, legal terms, and medical terms, etc.

The method of the present invention may further comprise a step of matching or searching, via a searching module 30E, from a library of texts 160 one or more pieces of reference texts having same or similar category groups as the inputted text. After the one or more pieces of reference texts having the same or similar category groups as the inputted text are matched and identified, the reference texts will be outputted to the user in a predetermined number such as, five texts in a time based on the degree of matching, for the user's review and selection. Since the outputted reference texts have the same or similar category groups as the inputted text, the matched reference texts share the same or similar characteristics such as in respect of the theme, the genre, the grade and/or the level of difficulty to the piece of inputted text. The search results will be preferably stored at the texts library 160 or the local memory 14 to speed up the searching time and for continuous learning by the system to improve accuracy of the search. In one embodiment, the user is allowed to refine the search results based on the category groups such as by specifying a theme, a genre, a grade, and/or a level of difficulty, etc. of the reference texts, as well as by specifying other parameters such as an author, a year of publication of the reference texts, and/or the use of idioms, part-of-speeches, etc. in the reference texts. The present invention is therefore beneficial to allow searching of reference texts comprising Chinese characters based on an inputted text comprising Chinese characters which share the same or required characteristics at high speed and accuracy.

The present invention also relates a computer readable medium storing machine readable instructions which, when implemented on a processor 30, implements the steps of the method as described above.

The present invention further relates a system comprising a memory 14 for storing data and a processor 30 for executing a computer readable medium, wherein the processor 30 is configured by computer readable instructions when being executed to implement the method as described above.

The present invention is advantageous in that it provides a novel device and method for an efficient analysis and evaluation of a piece of text comprising Chinese characters, with the results being presented in an easily understandable format such as in the form of a statistic showing a predetermined number of category groups having the highest number of block units to allow the category groups to be indicative of one or more characteristics of the text such as, but are not limited to, one or more of a theme, a genre, a grade and/or a level of difficulty of the text. The block units are categorized into the respective category groups based on one or more indicative, general meanings and/or associated meanings of the semantic radicals forming one or more selected characters comprising said block units. The present invention therefore provides a systematic and accurate method in analyzing a piece of Chinese text based on both explicit and implicit meanings of the characters based on the radicals forming said characters. The present invention further provides a device and a method offering a fast and effective searching for reference texts comprising Chinese characters based on the theme, the genre, the grade and/or the level of difficulty in relation to an input text comprising Chinese characters. The method and the system are implemented in a computer interface which is fast, effective and user-friendly. In one embodiment, the present invention can be applied in education such as E-learning, and specifically, for evaluating a piece of input Chinese text such as by suggesting to the user a suitable grade, a level of difficulty, and/or areas of improvement, etc. based on the statistic generated. The present invention can be easily adopted in both classroom and home learning environment for teachers, parents and students to gauge the learning progress. In another embodiment, the present invention can also be applied in any non-educational sectors which generally involve writing, editing and publishing etc.

The present invention enables effective analysis of texts comprising Chinese characters for grading purposes in a computationally efficient manner in that it involves one or more steps which prevent or reduce the unnecessary processing of data. For example, a detailed analysis of a piece of literature having hundreds or thousands of Chinese characters can be processed in seconds. In addition, a multiple number of texts can also be processed and analyzed simultaneously.

The present description illustrates the principles of the present invention. It will thus be appreciated that those skilled in the art will be able to devise various arrangements that, although not explicitly described or shown herein, embody the principles of the invention and are included within its spirit and scope.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The invention as defined by such claims resides in the fact that the functionalities provided by the various recited means are combined and brought together in the manner which the claims call for. It is thus regarded that any means that can provide those functionalities are equivalent to those shown herein.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It is to be understood that, if any prior art publication is referred to herein, such reference does not constitute an admission that the publication forms a part of the common general knowledge in the art.

## Claims

1. A computer-implemented method for analyzing a piece of text comprising Chinese characters, the method comprising the steps of:
truncating the piece of text into a plurality of first block units each having a first predefined number of N characters, where N is an integer and is greater than or equal to one;
determining, for a selected character from the N characters of each of the first block units, one or more radicals forming said selected character;
identifying, from the one or more radicals forming said selected character, one or more semantic radicals by comparing the one or more radicals with a database comprising semantic radicals and their associated meanings, and determining one or more meanings of the one or more semantic radicals in relation to said selected character;
categorizing the plurality of first block units into one or more category groups based on the determined one or more meanings of the one or more semantic radicals of the selected character of each of the first block units; and
computing a number of the first block units categorized in the respective one or more category groups indicative of one or more characteristics of the text.

2. The computer-implemented method according to claim 1, wherein the step of categorizing the plurality of first block units into one or more category groups further comprises categorizing the one or more first block units based on part-of-speeches of the one or more meanings of one or more semantic radicals of the selected character of each of the first block units.

3. The computer-implemented method according to claim 2, wherein the one or more characteristics of the text comprises one or more of a theme, a genre, a grade and/or a level of difficulty of the text.

4. The computer-implemented method according to claim 3, wherein the characteristics are determined by one or more ratios of the part-of-speeches of the one or more semantic radicals of the selected character of each of the first block units.

5. The computer-implemented method according to claim 1, wherein the meaning of the one or more semantic radicals comprises explicit, direct meaning and implicit, associated meaning.

6. The computer-implemented method according to claim 1, wherein the computing step further comprises a step of generating a statistic comprising a number of the first block units in each respective category groups.

7. The computer-implemented method according to claim 6, further comprising a step of outputting a predetermined number of category groups having a highest number of the first block units.

8. The computer-implemented method according to claim 7, further comprising storing the category groups having highest numbers of the first block units in respect of the piece of text being analyzed.

9. The computer-implemented method according to claim 8, further comprising a step of matching, from a library of texts, one or more pieces of reference texts having same or similar category groups.

10. The computer-implemented method according to claim 9, further comprising a step of outputting one or more pieces of matched reference texts having same or similar category groups.

11. The computer-implemented method according to claim 9, wherein the one or more pieces of matched reference texts share same or similar characteristics to the piece of text being analyzed.

12. The computer-implemented method according to claim 1, further comprising a step of successively truncating the text into one or more second block units each having a second predefined number of M characters, wherein M is an integer greater than N by at least a value of 1; and repeating the determining, identifying and categorizing steps prior to the computing step.

13. The computer-implemented method according to claim 1, wherein the method steps are implemented by one or more of a processor of a computer device and a network server.

14. The computer-implemented method according to claim 1, further comprising a step of storing the computed number of first block units categorized in the one or more category groups in a memory unit.

15. A system comprising a memory for storing data and a processor for executing computer readable instructions, wherein the processor is configured by the computer readable instructions when being executed to implement the method of any one of claims 1 to 14.
